# EUROPÄISCHE PATENTANMELDUNG

(11) **EP 1 264 718 A1**
(43) Veröffentlichungstag der Anmeldung: **11.12.2002**
(21) Anmeldenummer: 01113878.1
(22) Anmeldetag: 07.06.2001
(51) Int. Cl.: B60J 5/00, B60J 5/04

(54) **Fahrzeugtür mit einem Parallelogrammgelenk**

(71) Anmelder: Ford Global Technologies, Inc., A subsidiary of Ford Motor Company, Dearborn, Michigan 48126 (US)
(72) Erfinder: Nuernberg, Ralf Werner, 50354 Huerth (DE)
(74) Vertreter: Drömer, Hans-Carsten, Dipl.-Ing.

(57) **Zusammenfassung**

Die Erfindung betrifft eine Fahrzeugtür (2) zum Verschließen einer Türöffnung (15) in einer Kraftfahrzeugkarosserie (1), welche mittels eines Schwenkmechanismuses in eine die Türöffnung (15) zumindest teilweise freigebenden Öffnungsposition schwenkbar ist, bei der die Fahrzeugtür (2) eine in etwa parallele Stellung zur Kraftfahrzeugkarosserie (1) einnimmt, wobei die Fahrzeugtür (2) über wenigstens einen Schwenkhebel (3, 4) schwenkbar an der Kraftfahrzeugkarosserie (1) angelenkt ist. Sie ist dadurch gekennzeichnet, daß an dem ersten Schwenkhebel (3, 4) wenigstens ein zweiter Schwenkhebel (7, 8) drehbar angeordnet ist, und die Fahrzeugtür (2) durch Verschwenken des zweiten Schwenkhebels (7, 8) in einem ersten Bewegungsvorgang in eine erste Öffnungsposition und anschließend durch Verschwenken des ersten Schwenkhebels (3, 4) die Fahrzeugtür (2) in einem zweiten Bewegungsvorgang in die abschließende Öffnungsposition schwenkbar ist.

## Beschreibung

Die Erfindung betrifft eine Fahrzeugtür zum Verschließen einer Türöffnung in einer Kraftfahrzeugkarosserie, welche mittels eines Schwenkmechanismus in eine die Türöffnung zumindest teilweise freigebenden Öffnungsposition schwenkbar ist, bei der die Fahrzeugtür eine in etwa parallele Stellung zur Kraftfahrzeugkarosserie einnimmt, wobei die Fahrzeugtür über wenigstens einen Schwenkhebel schwenkbar an der Kraftfahrzeugkarosserie angelenkt ist.

Aus der deutschen Patentschrift DE 197 04 811 C1 ist eine Fahrzeugtür zum Verschließen einer Türöffnung bekannt, bei der das Verschwenken der Tür mittels mehrerer Schwenkhebel erfolgt, die während des Bewegungsvorganges gemeinsam bewegt werden. Der gesamte Bewegungsablauf wird nur durch Bewegung aller Schwenkhebel gemeinsam erreicht, so daß ein insgesamt komplizierter kinematischer Bewegungsablauf gegeben ist. Die Schwenkhebel benötigen, wie auch aus der Zeichnung zu erkennen ist, sehr viel Raum im geschlossenen Zustand der Fahrzeugtür. Ferner ist der Aufbau und die Anordnung der Schwenkhebel kompliziert und erfordert somit einen erhöhten Montageaufwand. Ferner stellen die tief in den Fahrzeuginnenraum ragenden Schwenkhebel ein erhöhtes Sicherheitsrisiko für die Fahrzeuginsassen, insbesondere im Falle eines Seitenaufpralles dar.

Eine weitere Fahrzeugtür zum Verschließen einer Türöffnung mit einem Schwenkmechanismus ist aus dem deutschen Patent DE 41 31 356 C1 bekannt. Bei diesem Schwenkmechanismus wird die Schwenkbewegung durch eine Zahnstange und mehrere zusammenwirkenden Zahnräder herbeigeführt. Die Herstellung der Zahnstange sowie der Zahnräder und die Montage derselben ist verhältnismäßig aufwendig und teuer. Ferner besteht die Gefahr, daß der Schwenkvorgang blockiert oder behindert wird, wenn die Zähne der einzelnen Bauteile nicht sauber ineinandergreifen.

Dem beschriebenen Stand der Technik ist als gemeinsam nachteilig anzusehen, daß die Schwenkmechanismen einen relativ hohen Herstellungsaufwand und Fertigungsaufwand erfordern. Ferner ist die Bautiefe in den Fahrzeuginnenraum relativ hoch, so daß der Schwenkmechanismus eine Gefahr für die Fahrzeuginsassen darstellt oder ein erhöhter Aufwand zur Abdeckung desselben getrieben werden muß.

Aus dem im Stand der Technik beschriebenen Nachteil liegt der Erfindung die Aufgabe zugrunde, eine Fahrzeugtür mit einem Schwenkmechanismus zu schaffen, dessen Aufbau aus herstellungs- und fertigungstechnischen Gesichtspunkten möglichst einfach sein soll und möglichst keine Gefahr für Fahrzeuginsassen insbesondere im Falle eines Seitenaufpralles darstellen soll.

Die Aufgabe wird durch die kennzeichnenden Merkmale der Ansprüche 1 und 9 gelöst. Weitere vorteilhafte Ausgestaltungen sind den Unteransprüchen 2 bis 8 und 10 bis 12 zu entnehmen.

Erfindungsgemäß wird zur Lösung der Aufgabe nach Anspruch 1 vorgeschlagen, daß an dem ersten Schwenkhebel wenigstens ein zweiter Schwenkhebel drehbar angeordnet ist und die Fahrzeugtür durch Verschwenken des zweiten Schwenkhebels in einem ersten Bewegungsvorgang in eine erste Öffnungsposition und anschließend durch Verschwenken des ersten Schwenkhebels die Fahrzeugtür in einem zweiten Bewegungsvorgang in die Öffnungsposition schwenkbar ist.

Der Vorteil der erfindungsgemäßen Lösung liegt darin, daß der Bewegungsvorgang in zwei Abschnitte unterteilt ist, nämlich einen ersten, in dem die Tür in eine erste Öffnungsposition herausgeklappt wird, wobei hier nur die erfindungsgemäß vorgesehenen zweiten Schwenkhebel bewegt werden. Anschließend erfolgt der eigentliche Bewegungsvorgang in die abschließende Öffnungsposition durch Verschwenken der ersten Schwenkhebel. Durch den erfindungsgemäßen Aufbau ist ein einfacher Bewegungsvorgang gegeben, wobei gleichzeitig sichergestellt ist, daß die Gefahr des Klemmens des Schwenkmechanismus minimiert ist. Die Montage des Schwenkmechanismus ist auf Grund ihres einfachen Aufbaus besonders einfach, so daß zur Montage derselben weder besonderes Geschick noch aufwendiges Werkzeug erforderlich ist.

Ferner wird vorgeschlagen, daß das Verhältnis der Längen zwischen dem ersten Schwenkhebel und dem zweiten Schwenkhebel wenigstens fünf zu eins beträgt. Damit läßt sich der gesamte Schwenkmechanismus möglichst flach in die Fahrzeugtür selbst hineinklappen, wobei sich der längere Schwenkhebel im wesentlichen längs zu der Fahrzeugtür erstreckt und der kürzere Schwenkhebel ohne Nachteile auch quer in der verschlossenen Fahrzeugtür angeordnet werden kann.

Der Bewegungsvorgang wird weiter erleichtert, wenn einem der Schwenkhebel eine den Bewegungsvorgang unterstützende und/oder auslösende Feder zugeordnet ist. Die von der Feder auf den Schwenkhebel ausgeübte Kraft kann dabei zur Auslösung des ersten Bewegungsvorganges oder auch zur Ausführung des gesamten Bewegungsvorganges ausgenutzt werden.

Weiterhin wird vorgeschlagen, daß einem der Schwenkhebel eine die Bewegungsvorgänge begrenzende Sperre zuordnet ist. Damit kann der Schwenkvorgang selbst begrenzt werden, so daß angrenzende Karosserieteile oder sonstige Bauteile nicht beschädigt werden können.

In vorteilhafter Weise ist wenigstens ein Schwenkhebel an einem im wesentlichen horizontalen Abschnitt der Türöffnung und wenigstens ein anderer Schwenkhebel an einem im wesentlichen vertikalen Abschnitt der Türöffnung befestigt. Damit ergibt sich eine besonders gute und stabile Halterung der Fahrzeugtür, indem die von der Fahrzeugtür auf den Schwenkmechanismus ausgeübten Kräfte und Momente minimiert werden. Durch die sich dadurch ergebene diagonale Befestigung der Kraftfahrzeugtür wird ein guter Kompromiß hinsichtlich der angreifenden Momente um die Hochachse als auch um die Längsachse der Fahrzeugtür gegeben.

Ferner wird vorgeschlagen, daß der zweite Schwenkhebel an der Fahrzeugtür und der erste Schwenkhebel an der Kraftfahrzeugkarosserie gehalten ist. Damit ergibt sich eine stabile Führung des Bewegungsvorganges durch den ersten Schwenkhebel und ein bedarfsweise erforderlicher Längenausgleich durch den zweiten Schwenkhebel.

Wenigstens ein Schwenkhebel kann längenveränderlich ausgebildet sein, so daß der Schwenkmechanismus für unterschiedliche Fahrzeugtüren bzw. Kraftfahrzeuge verwendet werden kann. Die Länge des Schwenkhebels wird dann vor dem Anbau an die Kraftfahrzeugkarosserie fahrzeugindividuell eingestellt und wird im befestigten Zustand nicht mehr verändert.

Ferner wird vorgeschlagen, daß wenigstens ein Schwenkhebel während des Schwenkvorganges längenveränderbar ausgebildet ist. Damit wird der Schwenkvorgang selbst soweit verbessert, daß die Tür flacher zum Auto hin geöffnet werden kann. Der Schwenkhebel wird dann nach Abschluß des Bewegungsvorganges und Einnahme der abschließenden Öffnungsposition ganz ausgezogen, so daß die Türöffnung möglichst großflächig freigegeben ist. Während des Einklappens der Tür kann der Schwenkhebel zusammengeschoben werden, so daß die Kurve der Fahrzeugtür während des Schwenkvorganges flacher an das Kraftfahrzeug herangelegt ist und der randseitig an das Fahrzeug grenzende erforderliche Freiraum zum Öffnen der Tür verringert ist.

Alternativ wird zur Lösung der erfindungsgemäßen Aufgabe nach Anspruch 9 vorgeschlagen, daß zwischen dem Schwenkhebel und der Fahrzeugtür ein Teleskopzylinder vorgesehen ist, durch dessen Betätigung die Schwenkbewegung auslösbar und/oder unterstützbar ist. Der Teleskopzylinder ist in vorteilhafter Weise an der Fahrzeugtür und dem Schwenkhebel befestigt, so daß keine besonderen Befestigungs- und Aufnahmepunkte an der Kraftfahrzeugkarosserie vorgesehen werden müssen. Damit ist es möglich eine serienmäßige Kraftfahrzeugkarosserie mit lediglich minimalen Veränderungen zu verwenden. Femer wird die, bei geöffneter Fahrzeugtür freigegebene Türöffnung nicht unnötig durch Öffnungshilfsmittel versperrt. Mit Hilfe des Teleskopzylinders wird die zur Öffnung der Tür erforderliche Kraft verringert und der Schwenkmechanismus mit einer vordefinierten gerichteten Kraft beaufschlagt. Aufgrund der vordefinierten gerichteten Kraft wird sichergestellt, daß der Schwenkmechanismus kontrolliert die Bewegungsvorgänge ausführt.

Der Teleskopzylinder ist vorzugsweise elektrisch betätigbar, so daß nur geringer Aufwand für die Energiezufuhr durch das Verlegen von elektrischen Leitungen erforderlich ist. Alternativ könnte auch ein Hydraulikzylinder verwendet werden, wobei allerdings das Verlegen der Hydraulikleitungen und die Dichtheit des Systems ein erhöhten Aufwand darstellen würde.
Nachfolgend wird die Erfindung anhand eines Ausführungsbeispiels näher beschrieben. Die Figuren zeigen:

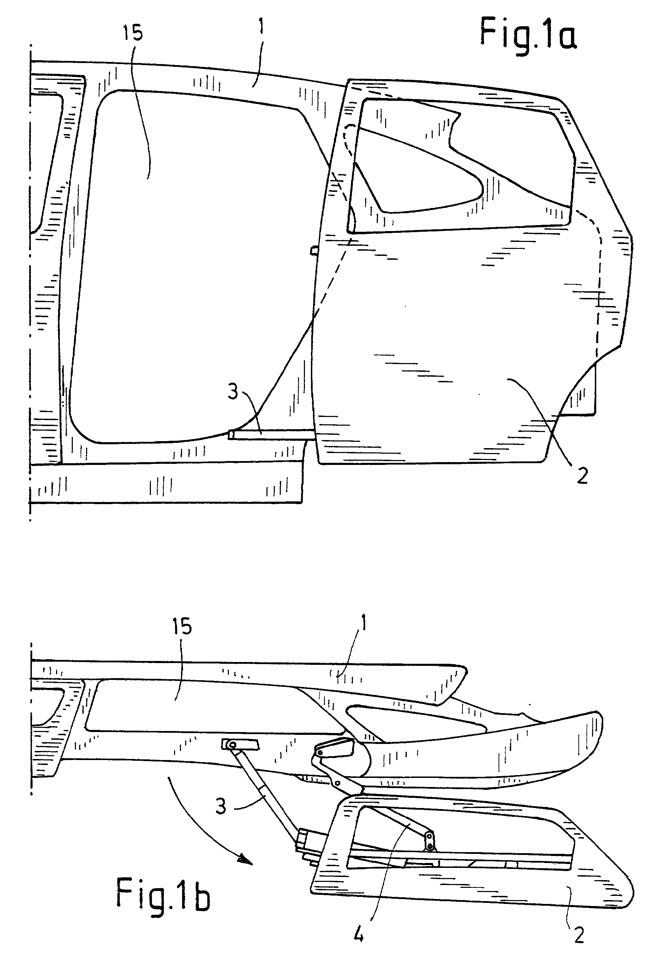

- Fig. 1 a: Kraftfahrzeugkarosserie mit herausgeschwenkter Fahrzeugtür in Seitenansicht;
- Fig. 1 b: Kraftfahrzeugkarosserie mit herausgeschwenkter Fahrzeugtür in Sicht von oben;
- Fig. 2: Fahrzeugtür mit Schwenkmechanismus im geschlossenen Zustand;
- Fig. 3: Fahrzeugtür mit Schwenkmechanismus in vier verschiedenen Stellungen;
- Fig. 4: Schwenkhebelmechanismus

In Fig. 1a ist in Seitenansicht eine Kraftfahrzeugkarosserie 1 zu erkennen, deren Türöffnung 15 von der herausgeschwenkten Fahrzeugtür 2 freigegeben ist. Die Fahrzeugtür 2 ist im unteren Abschnitt an der im wesentlichen horizontalen Kante der die Türöffnung 15 begrenzenden Kraftfahrzeugkarosserie 1 mittels eines Schwenkhebels 3 befestigt. Die Fahrzeugtür 2 ist mit einem weiteren Schwenkhebel befestigt, der hier jedoch nicht zu erkennen ist.

In Fig. 1 b ist die Kraftfahrzeugkarosserie 1 mit herausgeschwenkter Fahrzeugtür 2 in Sicht von oben zu erkennen. Die Fahrzeugtür2 ist mittels des Schwenkhebels 3 und des Schwenkhebels 4 an der Fahrzeugkarosserie 1 schwenkbar gehalten. Die Befestigung des Schwenkhebels 3 erfolgt in dem unteren im wesentlichen horizontalen Abschnitt der Kraftfahrzeugkarosserie 1, während die Befestigung des Schwenkhebels 4 an dem im wesentlichen nach oben vertikal verlaufenden hinteren Abschnitt, der die Türöffnung 15 begrenzenden Kraftfahrzeugkarosserie 1 erfolgt. Die Befestigung der Fahrzeugtür 2 erfolgt somit an zwei verschiedenen Punkten, die sowohl in Längserstreckung der Fahrzeugtür 2, als auch in der Höhe der Fahrzeugtür 2 versetzt sind. Damit ergibt sich eine stabile Befestigung der Fahrzeugtür 2, die sowohl Momente um die Längsachse als auch um die Hochachse der Fahrzeugtür 2 gut aufnimmt. Die Befestigung kann weiter dadurch stabilisiert werden, daß weitere Schwenkhebel vorgesehen sind, welche an dem sich in Fahrtrichtung nach oben vorne erstreckenden oberen Türrahmenabschnitt oder dem vorderen vertikal nach oben die Fensterfläche begrenzenden Türrahmenabschnitt befestigt sein können. Die Befestigung der Schwenkhebel 3 und 4 kann mittels einfacher Drehgelenke an einer Serienkarosserie vorgenommen werden. Die Drehgelenke werden z.B. über Punktschweißungen oder Schraubverbindungen an der Karosserie befestigt.

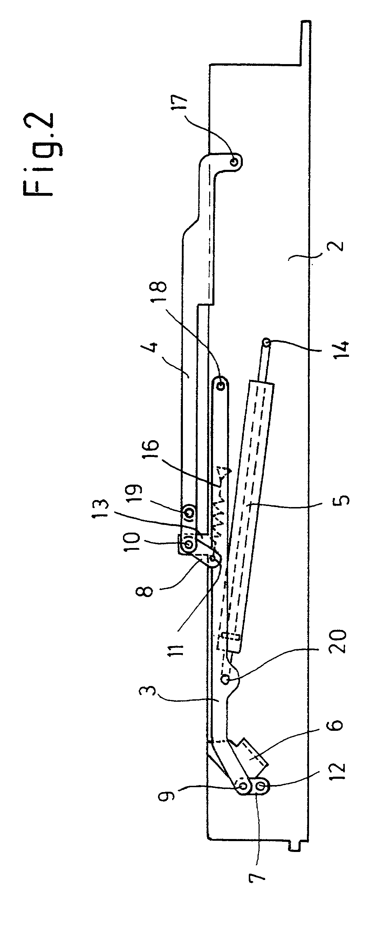

In Fig. 2 ist die Fahrzeugtür 2 mit dem darin angeordneten Schwenkmechanismus zu erkennen. Der Schwenkmechanismus besteht aus den zwei Schwenkhebeln 3 und 4, welche in den Befestigungspunkten 17 und 18 an der Fahrzeugkarosserie 1 drehbar gehalten sind. An dem jeweils anderen Ende der Schwenkhebel 3 und 4 sind in den Drehgelenken 9 und 19 zweite Schwenkhebel 7 und 8 drehbar befestigt. Die Schwenkhebel 7 und 8 sind wiederum schwenkbar in den Befestigungspunkten 10 und 12 an der Fahrzeugtür 2 gehalten. Der Befestigungspunkt 10 des Schwenkhebels 8 ist an einem Befestigungsflansch 13 angeordnet, welcher sich von der Fahrzeugtür 2 in den Fahrzeuginnenraum erstreckt. Der Schwenkhebel 8 erstreckt sich über den Befestigungspunkt 10 hinaus und weist an seinem Ende einen Anlenkpunkt 11 für eine Zugfeder 16 auf, welche wiederum mit der Fahrzeugtür 2 ortsfest verbunden ist. An der Fahrzeugtür 2 ist ferner die Sperre 6 befestigt, welche in den Extremstellungen die Schwenkbewegung begrenzt. Der Schwenkhebel 3 ist ferner mittels eines Teleskopzylinders 5, welcher an dem Schwenkhebel 3 in dem Befestigungspunkt 20 befestigt ist und anderenends im Befestigungspunkt 14 schwenkbar an der Fahrzeugtür 2 gehalten ist. Der Teleskopzylinder 5 unterstützt die noch später zu beschreibende Öffnungsbewegung.

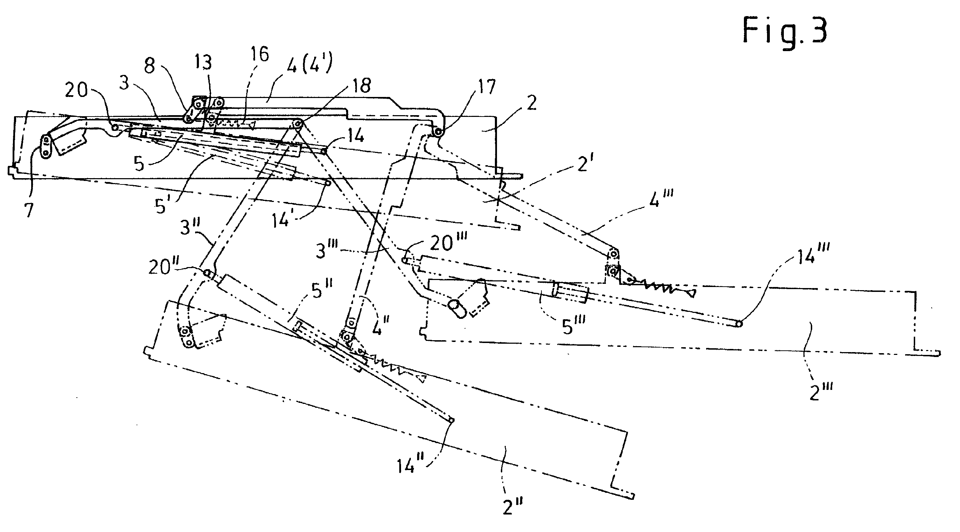

In Fig. 3 ist die Fahrzeugtür 2 mit dem Schwenkmechanismus in verschiedenen Stellungen während des Öffnungvorganges zu erkennen. Die Einzelbestandteile des Schwenkmechanismus in den einzelnen Stellungen sind durch Striche an den Bezugszeichen markiert. Ein Strich bedeutet Stellung nach Beenden des ersten Bewegungsvorganges, zwei Striche eine Stellung während des zweiten Bewegungsvorganges, drei Striche die Endstellung nach Beendigung des zweiten Bewegungsvorganges. Der Bewegungsvorgang wird zunächst durch Betätigung des Teleskopzylinders 5 ausgelöst. Dabei wird eine Kraft zwischen den Punkten 14 und 20 aufgebracht, wodurch der Schwenkhebel 3 mit einer Kraft beaufschlagt wird. Der Teleskopzylinder 5 ist vorzugsweise elektrisch betätigbar. Damit ist eine einfache Energiezufuhr über Stromleitungen möglich. Denkbar wäre jedoch auch einen Hydraulikzylinder zu verwenden oder einen pneumatischen Zylinder, wobei hier jedoch besondere Maßnahmen für die Betätigung des Druckfluides getroffen werden müßten. Während des ersten Bewegungsvorganges aus der geschlossenen Stellung in die Öffnungsposition werden lediglich die Schwenkhebel 7 und 8 betätigt, während die Schwenkhebel 3 und 4 nahezu ihre Position beibehalten. Die Bewegung des Schwenkhebels 8 wird dabei durch eine an dessen Ende angreifende Zugfeder unterstützt. Die Befestigungspunkte 17 und 18 sind der Kraftfahrzeugkarosserie 1 zugeordnet und somit während des gesamten Bewegungsvorganges lagefixiert. Nach Abschluß des ersten Bewegungsvorganges und Einnahme der Position' wirkt die Kraft weiterhin im Teleskopzylinder 5, so daß nunmehr die eigentliche Ausschwenkbewegung der Schwenkhebel 3 und 4 ausgelöst wird. Durch Aufbringen der Kraft in dem Teleskopzylinder 5 wird der Abstand zwischen den Befestigungspunkten 14 und 20 weiter vergrößert, so daß die Fahrzeugtür 2 förmlich von dem Schwenkhebel 3 weggedrückt wird.

Eine Position der Fahrzeugtür 2 während der zweiten Bewegungsphase ist durch die Kennzeichnung aller Teile mit" dargestellt. In der Endstellung''' des zweiten Bewegungsvorganges ist der Teleskopzylinder 5"' ganz ausgefahren und die Fahrzeugtür 2 in einer im wesentlichen parallelen Stellung zu einer nicht dargestellten Kraftfahrzeugtür 2. Die Stellung der übrigen Teile ist durch die mit''' ergänzten Bezugszeichen dargestellt.

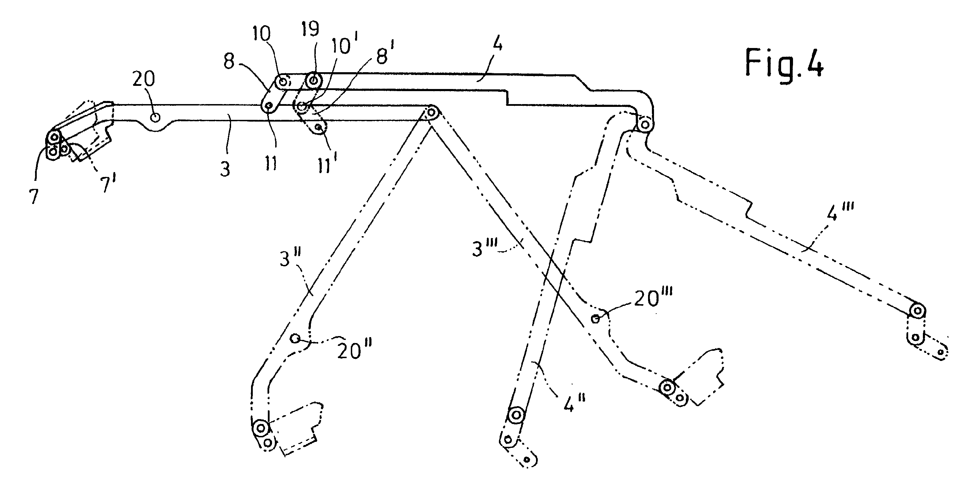

In der Fig. 4 ist der Schwenkmechanismus mit den Schwenkhebeln 3 und 4 während der verschiedenen Bewegungsphasen ohne die Fahrzeugtür 2 zu erkennen. In dem ersten Bewegungsabschnitt wird der Schwenkhebel 7 nach hinten gekippt und der Schwenkhebel 8 durch Angriff der Zugfeder in dem Anlenkpunkt 11 um das Drehgelenk 19 in die Stellung 8' heruntergeklappt. Die Schwenkhebel 3 und 4 nehmen während dieses Bewegungsvorganges nahezu eine unveränderliche Stellung ein. Der eigentliche Öffnungsvorgang besteht dann in der Bewegungsphase aus der Position' in die Position'''. Zur Veränderung der Bewegungsbahn der Fahrzeugtür 2 während der Öffnungsphase können die Schwenkhebel 3 und 4 längenveränderlich ausgebildet sein, so daß diese eine engere an die Kraftfahrzeugkarosserie 1 herangezogene Bewegungsbahn ermöglichen. Die Längenveränderlichkeit kann auch verstellbar und arretierbar ausgebildet sein, so daß der Schwenkmechanismus für Fahrzeugtypen unterschiedlicher Abmessungen verwendet werden kann.

### Bezugszeichenliste

- 1: Kraftfahrzeugkarosserie
- 2: Fahrzeugtür
- 3,4: Schwenkhebel
- 5: Teleskopzylinder
- 6: Sperre
- 7,8: Schwenkhebel
- 9,19: Drehgelenk
- 10: Befestigungspunkt
- 11: Anlenkpunkt für Zugfeder
- 12: Befestigungspunkt
- 13: Befestigungsflansch
- 14: Befestigungspunkt
- 15: Türöffnung
- 16: Zugfeder
- 17: Befestigungspunkt
- 18: Befestigungspunkt
- 20: Befestigungspunkt
- ': Öffnungspositon nach Abschluß des ersten Bewegungsvorganges
- '': Öffnungspositon während des zweiten Bewegungsvorganges
- ''': Öffnungsposition nach Abschluß des zweiten Bewegungsvorganges

## Patentansprüche

1. Fahrzeugtür (2) zum Verschließen einer Türöffnung (15) in einer Kraftfahrzeugkarosserie (1), welche mittels eines Schwenkmechanismuses in eine die Türöffnung (15) zumindest teilweise freigebenden Öffnungsposition schwenkbar ist, bei der die Fahrzeugtür (2) eine in etwa parallele Stellung zur Kraftfahrzeugkarosserie (1) einnimmt, wobei die Fahrzeugtür (2) über wenigstens einen Schwenkhebel (3, 4) schwenkbar an der Kraftfahrzeugkarosserie (1) angelenkt ist, **dadurch gekennzeichnet, daß** an dem ersten Schwenkhebel (3, 4) wenigstens ein zweiter Schwenkhebel (7, 8) drehbar angeordnet ist, und die Fahrzeugtür (2) durch Verschwenken des zweiten Schwenkhebels (7, 8) in einem ersten Bewegungsvorgang in eine erste Öffnungsposition und anschließend durch Verschwenken des ersten Schwenkhebels (3, 4) die Fahrzeugtür (2) in einem zweiten Bewegungsvorgang in die abschließende Öffnungsposition schwenkbar ist.

2. Fahrzeugtür (2) nach Anspruch 1, **dadurch gekennzeichnet, daß** das Verhältnis der Längen des ersten Schwenkhebels (3, 4) zu dem zweiten Schwenkhebel (7, 8) wenigsten fünf zu eins beträgt.

3. Fahrzeugtür (2) nach einem der vorangegangenen Ansprüche, **dadurch gekennzeichnet, daß** an wenigstens einem Schwenkhebel (3, 4, 7, 8) eine die Bewegungsvorgänge unterstützende und/oder auslösende Feder (16) vorgesehen ist.

4. Fahrzeugtür (2) nach einem der vorangegangenen Ansprüche, **dadurch gekennzeichnet, daß** an wenigstens einem Schwenkhebel (3, 4, 7, 8) eine die Bewegungsvorgänge begrenzende Sperre (6) vorgesehen ist.

5. Fahrzeugtür (2) nach einem der vorangegangen Ansprüche, **dadurch gekennzeichnet, daß** ein Schwenkhebel (3, 4, 7, 8) an einem im wesentlichen horizontalen Abschnitt der Türöffnung (15) und wenigstens ein anderer Schwenkhebel (3, 4, 7, 8) an einem im wesentlichen vertikalen Abschnitt der Türöffnung (15) befestigt ist.

6. Fahrzeugtür (2) nach einem der vorangegangenen Ansprüche, **dadurch gekennzeichnet, daß** der zweite Schwenkhebel (7, 8) an der Fahrzeugtür (2) und wenigsten ein erster Schwenkhebel (3, 4) an der Kraftfahrzeugkarosserie (1) gehalten ist.

7. Fahrzeugtür (2) nach einem der vorangegangenen Ansprüche, **dadurch gekennzeichnet, daß** wenigstens ein Schwenkhebel (3, 4, 7, 8) längenveränderlich ausgebildet ist.

8. Fahrzeugtür (2) nach einem der vorangegangenen Ansprüche, **dadurch gekennzeichnet, daß** wenigsten ein Schwenkhebel (3, 4, 7, 8) während des Schwenkvorganges längenveränderbar ist.

9. Fahrzeugtür (2) nach dem Oberbegriff des Anspruches 1, **dadurch gekennzeichnet, daß** zwischen einem Schwenkhebel (3, 4, 7, 8) und der Fahrzeugtür (2) ein Teleskopzylinder (5) vorgesehen ist, und durch Betätigung des Teleskopzylinders die Schwenkbewegung auslösbar und/oder unterstützbar ist.

10. Fahrzeugtür (2) nach Anspruch 9, **dadurch gekennzeichnet, daß** der Teleskopzylinder (5) elektrisch betätigbar ist.

11. Fahrzeugtür (2) nach einem der Ansprüche 9 oder 10, **dadurch gekennzeichnet, daß** die Fahrzeugtür (2) einen Schwenkmechanismus mit den Merkmalen eines der Ansprüche 1 bis 8 aufweist.

12. Fahrzeugtür (2) nach Anspruch 11, **dadurch gekennzeichnet, daß** der Teleskopzylinder (5) an dem ersten Schwenkhebel (3,4) befestigt ist.
